# EUROPÄISCHE PATENTSCHRIFT

(11) **EP 2 739 434 B1**
(45) Veröffentlichungstag und Bekanntmachung des Hinweises auf die Patenterteilung: **25.10.2017**
(21) Anmeldenummer: 12735137.7
(22) Anmeldetag: 11.07.2012
(51) Int. Cl.: B23K 37/04, F16B 21/08, F16B 5/08, F16B 5/06, B23K 31/02, C09J 5/00

(54) **VERFAHREN ZUM VERBINDEN ZWEIER BAUTEILE SOWIE BAUTEILVERBINDUNG**
METHOD FOR CONNECTING TWO COMPONENTS, AND COMPONENT CONNECTION
PROCÉDÉ D'ASSEMBLAGE DE DEUX PIÈCES ET LIAISON DE PIÈCES

(30) Priorität: 03.08.2011 DE 102011080317
(43) Veröffentlichungstag der Anmeldung: 11.06.2014
(73) Patentinhaber: Bayerische Motoren Werke Aktiengesellschaft, 80809 München (DE)
(72) Erfinder: HERZINGER, Thomas, 80639 München (DE); WOLF, Sonja, 81675 Muenchen (DE); NIEKERK, Johann, 80993 München (DE); BERGER, Matthias, 80937 Muenchen (DE)
(74) Vertreter: Diener, Reinhold Jürgen
(86) Internationale Anmeldenummer: PCT/EP2012/063535
(87) Internationale Veröffentlichungsnummer: WO 2013/017381

(56) Entgegenhaltungen:
- WO-A1-2005/068290
- DE-A1- 1 475 035
- DE-A1- 2 053 444
- DE-A1- 3 232 926
- DE-A1-102010 015 179
- US-A- 2 266 049
- US-A- 2 895 367
- US-A- 3 009 381
- US-A- 5 014 934
- US-A- 5 775 863
- US-A1- 2005 241 121
- US-B1- 6 442 806

## Beschreibung

Die vorliegende Erfindung betrifft ein Verfahren zum Verbinden zweier Bauteile gemäß dem Oberbegriff des Patentanspruches 1 sowie eine Bauteilverbindung gemäß dem Oberbegriff des Patentanspruches 2.

Ein derartiges Verfahren ist aus der DE 20 53 444 A1 bekannt. Eine Bauteilverbindung gemäß dem Oberbegriff des Patentanspruchs 2 ist aus der US 2005/0241121 A1 bekannt.

In der Großserienfertigung von Fahrzeugkarosserien müssen eine Vielzahl von Karosserieteilen mit hoher Präzision und Wiederholgenauigkeit relativ zueinander positioniert und anschließend miteinander verbunden werden, z.B. durch Verschweißen, Verschrauben, Verkleben o.ä. Das Ausrichten der miteinander zu verbindenden Bauteile erfolgt bislang ganz überwiegend durch bauteilspezifische und entsprechend teure Positionierungsvorrichtungen. Die relativ zueinander zu positionierenden Karosserieteile werden an den Positionierungsvorrichtungen üblicherweise mittels Pass-Stiften positioniert. Derartige Positionierungsvorrichtungen sind nicht nur teuer, sondern auch unflexibel, da sie eigens auf das jeweilige Karosseriebauteil abgestimmt sein müssen.

Aufgabe der Erfindung ist es, ein kostengünstiges und flexibles Verfahren zum Verbinden zweier Bauteile sowie eine entsprechende Bauteilverbindung zu schaffen.

Diese Aufgabe wird durch die Merkmale des Patentanspruches 1 bzw. 2 gelöst. Vorteilhafte Ausgestaltungen und Weiterbildungen der Erfindung sind den Unteransprüchen zu entnehmen.

Das Grundprinzip der Erfindung besteht in einem Verbindungselement, das mindestens einen Klemmkopf aufweist, auf den ein Klemmelement aufgeclipst wird. Mit einem derartigen Verbindungselement können zwei Bauteile miteinander verbunden oder auch nur lösbar relativ zueinander fixiert werden. Wenngleich die Erfindung im Folgenden anhand zweier miteinander zu verbindender Bauteile beschrieben wird, versteht sich, dass mit einer Fixiereinrichtung gemäß der Erfindung selbstverständlich auch drei oder mehr übereinander bzw. aneinander anliegende Bauteile miteinander verbunden werden können.

Der Begriff "Bauteil" ist äußerst breit zu interpretieren. Prinzipiell kann es sich um beliebige Bauteile handeln. Da die Erfindung insbesondere auch im Fahrzeugkarosseriebau eingesetzt werden kann, kann es sich bei einem der beiden Bauteile oder beiden Bauteilen um Fahrzeugkarosseriebauteile handeln.

Das erste Bauteil weist ein erstes Loch und das zweite Bauteil weist ein zweites Loch auf. Die miteinander zu verbindenden Bauteile werden zunächst aneinander gelegt, so dass die Löcher übereinander liegen. Der Begriff "legen" ist nicht an eine bestimmte Postion oder Richtung im Raum gebunden, sondern ganz allgemein zu interpretieren, nämlich im Sinne von "aneinanderbringen".

Anschließend werden die beiden Bauteile mittels des Verbindungselements und des mindestens einen Klemmelements miteinander (lösbar) verbunden bzw. relativ zueinander (lösbar) vorfixiert. Hierzu wird das Verbindungselement durch die in den beiden Bauteilen vorgesehenen Löcher gesteckt, derart, dass der mindestens eine Klemmkopf des Verbindungselements über eine Seite des einen Bauteils, welche dem anderen Bauteil abgewandt ist, vorsteht.

Anschließend wird auf den Klemmkopf des Verbindungselements ein Klemmelement aufgeclipst, wobei das Verbindungselement und das Klemmelement so konzipiert und aufeinander abgestimmt sind, dass sich das Klemmelement an dem einen der beiden Bauteile abstützt und eine die beiden Bauteile zusammenklemmende Klemmkraft auf das Verbindungselement ausübt. Das Verbindungselement fungiert also als "Sparinstift", der durch die in den beiden Bauteilen vorgesehenen Löcher geführt ist. Das Klemmelement bzw. die Klemmelemente spannen die beiden Bauteile gegeneinander.

Die beiden Bauteile können durch ein oder mehrere derartige "Vorfixiereinrichtungen", die jeweils durch ein Verbindungselement mit mindestens einem Klemmkopf und mindestens ein Klemmelement gebildet sind, (lösbar) miteinander verbunden oder relativ zueinander vorfixiert werden.

Nach dem Anbringen einer derartigen Fixiereinrichtung oder mehrerer derartiger Fixiereinrichtungen werden die beiden Bauteile dauerhaft fest miteinander verbunden, z.B. durch Verschweißen, Verkleben, Verschrauben, Vernieten oder durch andere Verbindungstechniken, insbesondere durch solche Verbindungstechniken, die nicht ohne weiteres, d.h. nicht ohne Zuhilfenahme von Werkzeugen, gelöst werden können. Das dauerhafte feste Verbinden der beiden Bauteile unterscheidet sich von dem (lösbaren) Fixieren bzw. Verbinden der beiden Bauteile mittels des Verbindungselements dadurch, dass die durch das Verbindungselement und das mindestens eine Klemmelement gebildete Fixiereinrichtung ohne weiteres von Hand durch Abziehen des Klemmelements von dem Klemmkopf des Verbindungselements gelöst werden kann.

Dementsprechend kann vorgesehen sein, dass nach dem dauerhaften Verbinden der beiden Bauteile das mindestens eine Klemmelement und das Verbindungselement von den beiden Bauteilen wieder entfernt werden.

Es kann vorgesehen sein, dass eine durch das Verbindungselement und mindestens ein Klemmelement gebildete Fixiereinrichtung ausschließlich zum Fixieren bzw. Positionieren zweier miteinander zu verbindender Bauteile genutzt wird.

Nach einer Weiterbildung der Erfindung sind die in den beiden Bauteilen vorgesehenen Löcher, durch die das Verbindungselement hindurchgesteckt wird, kreisrund ausgebildet. Insbesondere kann vorgesehen sein, dass die beiden Bauteile so ausgerichtet werden, dass die Löcher konzentrisch relativ zueinander angeordnet sind.

Alternativ dazu kann auch vorgesehen sein, dass eines der beiden Löcher oder beide Löcher eine von einer Kreisform abweichende Form haben. Beispielsweise kann eines der beiden Löcher oder können beide Löcher als Langlöcher ausgeführt sein, was dann eine "schwimmende Fixierung" der beiden Bauteile relativ zueinander ermöglicht.

Die beiden Bauteile können durch mehrere erfindungsgemäße "Bauteilverbindungen", die jeweils durch mindestens ein Verbindungselement und mindestens ein Klemmelement gebildet sind, miteinander verbunden werden. Sind alle "Fixierstellen" schwimmend ausgeführt, so können die beiden Bauteile nach der Vorfixierung noch relativ zueinander verschoben, d. h. auf eine vorgegebene Relativposition gebracht werden. Die Geometrie und Ausrichtung der Löcher, die z. B. als Langlöcher ausgeführt sein können, definieren dabei die Freiheitsgrade, in denen die beiden Bauteile relativ zueinander "schwimmen" können.

Ferner kann vorgesehen sein, dass das Verbindungselement und/oder eines der beiden Löcher oder beide Löcher rotationssymmetrisch bezüglich einer Längsachse ausgebildet sind. In diesem Fall können die beiden Bauteile auch nach dem Einstecken des Verbindungselements um die Längsachse relativ zueinander verdreht werden.

Alternativ dazu kann auch vorgesehen sein, dass das Verbindungselement und eines der beiden Löcher oder beide Löcher gerade nicht rotationssymmetrisch ausgebildet sind, sondern eine davon abweichende, z. B. mehreckige Kontur aufweisen. In diesem Fall können die beiden Bauteile mittels eines einzigen Verbindungselements nicht nur zusammengeklemmt, sondern zusätzlich auch geschützt gegen Verdrehen um die Längsachse relativ zueinander positioniert werden.

Nach einer Weiterbildung der Erfindung weist das Verbindungselement einen "Passabschnitt" auf, welcher komplementär in Bezug auf die beiden Löcher gestaltet ist. Unter dem Passabschnitt wird derjenige Abschnitt des Verbindungselements verstanden, der die beiden Bauteile durchsetzt. Der Passabschnitt bildet somit mit mindestens einem der beiden Löcher eine "Passung". Der Begriff "Passung" ist ein dem Fachmann geläufiger Begriff des allgemeinen Maschinenbaus und braucht daher nicht weiter erläutert werden.

Es kann vorgesehen sein, dass der Passabschnitt der Dicke der beiden miteinander zu verbindenden Bauteile entspricht. Durch einen derartigen Passabschnitt kann erreicht werden, dass die beiden Bauteile in einer Richtung quer zu der Längsachse des Verbindungselements unverschiebbar relativ zueinander positioniert sind. Mit dem Begriff "Passabschnitt" ist gemeint, dass der betreffende Abschnitt des Verbindungselements in Bezug auf die beiden Löcher nur eine sehr geringe Luft bzw. nur ein sehr geringes Spiel von z.B. wenigen Zehntel Millimetern, wenigen Hundertstel Millimetern, wenigen Tausendstel Millimetern oder ein noch geringeres Spiel aufweist. Der Klemmkopf des Verbindungselements ist als Kugel ausgebildet.

Der Klemmkopf kann integraler Bestandteil des Verbindungselements sein. Er kann also einstückig mit dem Passabschnitt verbunden sein.

Wie bereits erwähnt, weist ein Verbindungselement gemäß der Erfindung mindestens einen Klemmkopf auf. Zusätzlich zu dem "ersten Klemmkopf' kann das Verbindungselement auch einen zweiten Klemmkopf, dem ersten Klemmkopf abgewandten Klemmkopf aufweisen. Der zweite Klemmkopf kann also über den Passabschnitt mit dem ersten Klemmkopf verbunden sein.

Auf den zweiten Klemmkopf kann ebenfalls ein Klemmelement aufgeclipst sein. Eine derartige "Fixiereinrichtung" besteht im Wesentlichen aus zwei Klemmelementen, die jeweils auf einen zugeordneten Klemmkopf eines sich durch zwei miteinander zu verbindende Bauteile hindurch erstreckenden Verbindungselements aufgeclipst sind.

Das Verbindungselement kann aus Metall, insbesondere aus Stahl oder Aluminium hergestellt sein. Prinzipiell kann das Verbindungselement und das mindestens eine Klemmelement bzw. können die Klemmelemente auch aus einem anderen Material, wie z.B. Kunststoff, hergestellt sein.

Im Folgenden wird die Erfindung im Zusammenhang mit der Zeichnung näher erläutert. Es zeigen:
- Figur 1: ein erstes Ausführungsbeispiel eines Verbindungselements gemäß der Erfindung;
- Figur 2: ein zweites Ausführungsbeispiel eines Verbindungselements gemäß der Erfindung; und
- Figur 3: zwei Bauteile, die mittels des in Figur 2 gezeigten Verbindungselements und zwei Klemmelementen miteinander verbunden sind.

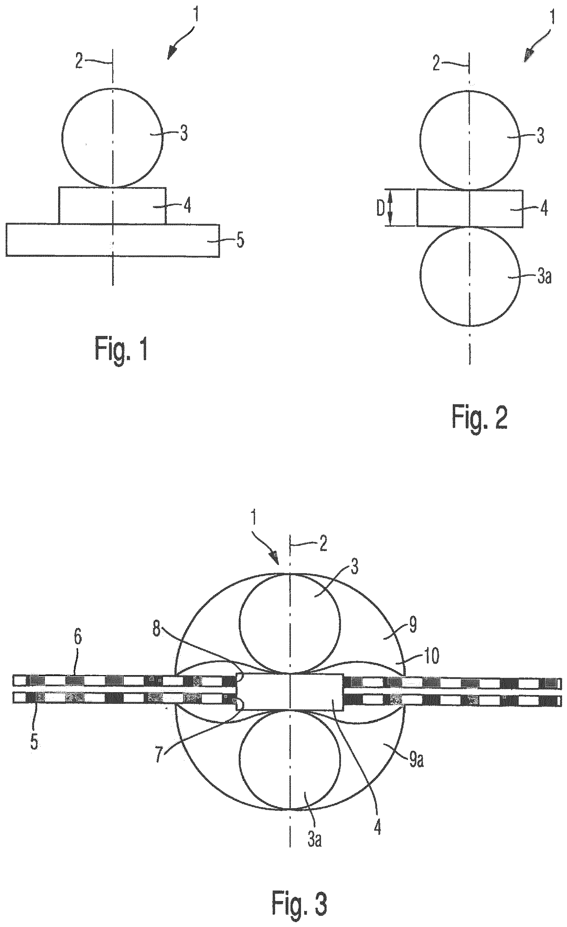

Figur 1 zeigt ein Verbindungselement 1, das rotationssymmetrisch bezüglich einer Längsachse 2 ausgebildet ist. Das Verbindungselement 1 weist einen Klemmkopf 3 auf, der hier als Kugel ausgestaltet ist. An den Klemmkopf 3 schließt sich ein Passabschnitt 4 an. Der Passabschnitt 4 ist komplementär in Bezug auf zwei Löcher, die in miteinander zu verbindenden Bauteilen vorgesehen sind, abgestimmt. An den Passabschnitt 4 schließt sich ein Klemmabschnitt 5 an, der eines der beiden Löcher, die in miteinander zu verbindenden Bauteilen (nicht dargestellt) vorgesehen sind, überdeckt bzw. hintergreift.

Figur 2 zeigt ein Ausführungsbeispiel eines Verbindungselements 1, das zusätzlich zu dem ersten Klemmkopf 3 einen zweiten Klemmkopf 3a aufweist. Die beiden Klemmköpfe 3, 3a sind bei dem hier gezeigten Ausführungsbeispiel jeweils als Kugel ausgebildet. Die beiden Klemmköpfe 3, 3a sind auf einander gegenüberliegenden Seiten des Passabschnitts 4 angeordnet und mit dem Passabschnitt 4 verbunden. Die beiden in den Figuren 1 und 2 gezeigten Verbindungselemente 1 können einstückig aus einem Metallwerkstoff oder aus einem Kunststoff hergestellt sein. Sie können z. B. gegossen, mittels einer Drehmaschine gedreht oder gefräst worden sein.

Figur 3 zeigt das Grundprinzip, wie man mit einem Verbindungselement, wie es in den Figuren 1 oder 2 gezeigt ist, zwei Bauteile relativ zueinander positionieren und miteinander verbinden kann. Bei dem in Figur 3 gezeigten Ausführungsbeispiel wird ein Verbindungselement 1 verwendet, wie es in Figur 2 dargestellt ist. Figur 3 zeigt ein erstes platinenartiges Bauteil 5, bei dem es sich beispielsweise um ein Blech eines hier nicht näher dargestellten Karosseriebauteils eines Fahrzeugs handeln kann, auf das ein zweites platinenartiges Bauteil 6 gelegt ist, bei dem es sich z. B. ebenfalls um ein Blech eines Karosseriebauteils handeln kann. In dem ersten Bauteil 5 ist ein erstes Loch 7 vorgesehen. In dem zweiten Bauteil 6 ist ein zweites Loch 8 vorgesehen. Die beiden Bauteile 5, 6 sind so relativ zueinander ausgerichtet, dass sie aneinander anliegen und die beiden Löcher 7, 8 konzentrisch zueinander ausgerichtet sind. Durch die beiden Löcher 7, 8 ist das in Figur 2 gezeigte Verbindungselement 1 hindurchgesteckt.

Wie aus Figur 3 ersichtlich ist, ist der Passabschnitt 4 komplementär in Bezug auf die beiden Löcher gestaltet. Durch den Passabschnitt 4 sind die beiden Bauteile 5, 6 somit unverschieblich in Richtungen, die quer zu der Längsachse 2 sind, positioniert. Bei dem in Figur 3 gezeigten Ausführungsbeispiel ist die in Richtung der Längsachse 2 gemessene Dicke D des Passabschnitts 4 geringfügig größer als die Summe der Dicken der beiden Bauteile 5, 6. Der Passabschnitt 4 steht somit geringfügig über die beiden platinenartigen Bauteile 5, 6 vor. Dies muss nicht notwendigerweise der Fall sein. Die Dicke D des Passabschnitts könnte auch etwas kleiner sein als die Summe der Bauteildicken im Bereich der Löcher 7, 8.

Wie aus Figur 3 ersichtlich ist, ist auf den ersten Klemmkopf 3 ein erstes Klemmelement 9 und auf den zweiten Klemmkopf 3a ein zweites Klemmelement 9a aufgeklemmt bzw. aufgeclipst. Das Klemmelement 9 ist hier rotationssymmetrisch bezüglich der Längsachse 2 gestaltet. Es weist einen umlaufenden, ringartigen Abstützbereich 10 auf, der auf eine Außenseite des Bauteils 6 drückt, welche dem Bauteil 5 abgewandt ist. Das Klemmelement 9a ist identisch in Bezug auf das Klemmelement 9 gestaltet.

Die beiden Klemmelemente 9, 9a und das Verbindungselement 1 sind so aufeinander abgestimmt, dass sich nach dem Aufclipsen der beiden Klemmelemente 9, 9a auf die Klemmköpfe 3, 3a des Verbindungselements 1 eine die beiden Bauteile zusammenklemmende Klemmkraft ergibt.

Hierzu müssen die beiden Klemmelemente 9, 9a hinreichend elastisch gestaltet sein, so dass ein Aufclipsen auf den zugeordneten Klemmkopf 3 bzw. 3a möglich ist.

## Patentansprüche

1. Verfahren zum Verbinden eines ersten, ein erstes Loch (7) aufweisenden Bauteils (5) mit einem zweiten, ein zweites Loch (8) aufweisenden Bauteils (6) mit folgenden Schritten:
• Aneinanderbringen der beiden Bauteile (5, 6), so dass sich die Löcher (7, 8) übereinander befinden,
• Fixieren der beiden Bauteile (5, 6) aneinander durch
o Hindurchstecken eines über die beiden Bauteile vorstehenden Verbindungselements (1) durch die beiden Bauteile (5, 6), wobei das Verbindungselement (1) mindestens einen Klemmkopf (3, 3a) aufweist, der über eine dem zweiten Bauteil (6) abgewandte Seite des ersten Bauteils (5) vorsteht, und
o Anbringen eines Klemmelements (9, 9a), so dass das Klemmelement (9, 9a) sich an einer dem zweiten Bauteil (6) abgewandten Seite des ersten Bauteils (5) abstützt und eine die beiden Bauteile (5, 6) zusammenklemmende Klemmkraft auf das Verbindungselement (1) ausübt,
**dadurch gekennzeichnet, dass**
• ein Verbindungselement (1) verwendet wird, welches einen Klemmkopf (3, 3a) aufweist, der die Form einer Kugel hat und das Anbringen durch elastisches Aufclipsen des Klemmelements (9, 9a) auf die Kugel erfolgt,
• die beiden Bauteile nach dem Fixieren dauerhaft fest miteinander verbunden werden, insbesondere durch Verschweißen oder Verkleben und
• nach dem dauerhaft festen Verbinden der beiden Bauteile (5, 6) das Verbindungselement (1) und das mindestens eine Klemmelement (3, 3a) von den beiden Bauteilen (5, 6) entfernt werden.

2. Bauteitverbindung, mit
• einem ersten Bauteil (5), welches,ein erstes Loch (7) aufweist,
• einem an dem ersten Bauteil (5) anliegenden zweiten Bauteil (6), welches ein zweites Loch (8) aufweist,
• einem sich durch die beiden Löcher (7, 8) hindurch erstreckenden Verbindungselement (1), welches über die beiden Bauteile (5, 6) vorsteht, wobei ein Klemmelement (9, 9a) vorgesehen ist, welches sich an einer dem zweiten Bauteil (6) abgewandten Seite des ersten Bauteils (5) abstützt und eine die beiden Bauteile (5, 6) zusammenklemmende Klemmkraft auf das Verbindungselement (1) ausübt,
• das Verbindungselement (1) mindestens einen Klemmkopf (3, 3a) aufweist, der die Form einer Kugel aufweist und der über eine dem zweiten Bauteil (6) abgewandte Seite des ersten Bauteils (5) vorsteht,
**dadurch gekennzeichnet, dass**
• das Klemmelement (9, 9a) elastisch auf die Kugel aufgeclipst ist,
• das Verbindungselement (1) einen Passabschnitt (4) aufweist, welcher komplementär in Bezug auf die beiden Löcher (7, 8) gestaltet ist, wobei die beiden Bauteile (5, 6) durch den Passabschnitt (4) in einer zu der Längsachse (2) des Verbindungselements (1) zur senkrechten Ebene unverschiebbar relativ zueinander positioniert sind und
• die beiden Bauteile dauerhaft fest miteinander verbunden sind, insbesondere durch Verschweißen oder Verkleben.

3. Bauteilverbindung nach Anspruch 2,
**dadurch gekennzeichnet, dass** die Löcher (7, 8) kreisrund sind.

4. Bauteilverbindung nach Anspruch 2 oder 3,
**dadurch gekennzeichnet, dass** die beiden Löcher (7, 8) konzentrisch relativ zueinander ausgerichtet sind.

5. Bauteilverbindung nach einem der Ansprüche 2 bis 4,
**dadurch gekennzeichnet, dass** das Verbindungselement (1) rotationssymmetrisch bezüglich einer Längsachse (2) ist.

6. Bauteilverbindung nach einem der Ansprüche 2 bis 5,
**dadurch gekennzeichnet, dass** der Klemmkopf (3, 3a) einstückig mit dem Passabschnitt (4) verbunden ist.

7. Bauteilverbindung nach einem der Ansprüche 2 bis 6,
**dadurch gekennzeichnet, dass** das Verbindungselement (1) einen ersten Klemmkopf (3) aufweist, der über den Passabschnitt (4) mit einem zweiten Klemmkopf (3a) verbunden ist.

8. Bauteilverbindung nach Anspruch 7,
**dadurch gekennzeichnet, dass** auf den zweiten Klemmkopf (3a) ebenfalls ein Klemmelement (9a) aufgeclipst ist.

9. Bauteilverbindung nach einem der Ansprüche 2 bis 8,
**dadurch gekennzeichnet, dass** das Verbindungselement (1) aus Metall, insbesondere aus Stahl oder Aluminium ist.

10. Bauteilverbindung nach einem der Ansprüche 2 bis 9,
**dadurch gekennzeichnet, dass** es sich bei mindestens einem der beiden Bauteile (5, 6) um ein Karosserieteil einer herzustellenden Fahrzeugkarosserie handelt.

## Claims

1. A method for connecting a first component (5) having a first hole (7) to a second component (6) having a second hole (8), with the following steps:
• bringing the two components (5, 6) together so that the holes (7, 8) are located one above the other,
• fixing the two components (5, 6) to each other by
∘ inserting through the two components (5, 6) a connecting element (1) which projects over the two components, wherein the connecting element (1) has at least one clamping head (3, 3a) which projects over a side of the first component (5) which is remote from the second component (6), and
∘ attaching a clamping element (9, 9a), so that the clamping element (9, 9a) is supported on a side of the first component (5) which is remote from the second component (6) and exerts on the connecting element (1) a clamping force which clamps the two components (5, 6) together,
**characterised in that**
• a connecting element (1) is used which has a clamping head (3, 3a) which is in the shape of a sphere, and the attachment takes place by elastically clipping the clamping element (9, 9a) to the sphere,
• the two components, after the fixing, are permanently securely connected together, especially by welding or gluing, and
• after the permanently secure connection of the two components (5, 6), the connecting element (1) and the at least one clamping element (3, 3a) are removed from the two components (5, 6).

2. A component connection, with
• a first component (5) which has a first hole (7),
• a second component (6) which lies against the first component (5) and has a second hole (8),
• a connecting element (1) extending through the two holes (7, 8), which projects over the two components (5, 6), wherein a clamping element (9, 9a) is provided which is supported on a side of the first component (5) which is remote from the second component (6) and exerts on the connecting element (1) a clamping force which clamps the two components (5, 6) together,
• the connecting element (1) has at least one clamping head (3, 3a) which is in the form of a sphere and which projects over a side of the first component (5) which is remote from the second component (6), **characterised in that**
• the clamping element (9, 9a) is elastically clipped onto the sphere,
• the connecting element (1) has a fitting portion (4) which is configured complementarily to the two holes (7, 8), the two components (5, 6) being positioned by the fitting portion (4) non-displaceably relative to each other in a to the longitudinal axis (2) of the connecting element (1) to the perpendicular plane and
• the two components are permanently securely connected together, especially by welding or gluing.

3. A component connection according to Claim 2,
**characterised in that** the holes (7, 8) are circular.

4. A component connection according to Claim 2 or Claim 3,
**characterised in that** the two holes (7, 8) are oriented concentrically relative to one another.

5. A component connection according to one of Claims 2 to 4,
**characterised in that** the connecting element (1) is rotationally symmetrical with respect to a longitudinal axis (2).

6. A component connection according to one of Claims 2 to 5,
**characterised in that** the clamping head (3, 3a) is connected in one piece to the fitting portion (4).

7. A component connection according to one of Claims 2 to 6, **characterised in that** the connecting element (1) has a first clamping head (3) which is connected to a second clamping head (3a) via the fitting portion (4).

8. A component connection according to Claim 7,
**characterised in that** a clamping element (9a) is likewise clipped onto the second clamping head (3a).

9. A component connection according to one of Claims 2 to 8,
**characterised in that** the connecting element (1) is made of metal, especially of steel or aluminium.

10. A component connection according to one of Claims 2 to 9,
**characterised in that** at least one of the two components (5, 6) is a vehicle body part of a vehicle body which is to be produced.

## Revendications

1. Procédé d'assemblage d'une première pièce (5) comportant un premier trou (7) avec une seconde pièce (6) comportant un second trou (8), comprenant les étapes suivantes consistant à :
• positionner les deux pièces (5, 6) l'une contre l'autre de sorte que les trous (7, 8) soient situés l'un sur l'autre,
• fixer les deux pièces (5, 6) l'une contre l'autre :
∘ en enfichant au travers des deux pièces (5, 6) un élément d'assemblage (1) dépassant de ces deux pièces, l'élément d'assemblage (1) comprenant au moins une tête de serrage (3, 3a) qui dépasse du côté de la première pièce (5) situé à l'opposé de la seconde pièce (6), et
∘ en mettant en place un élément de serrage (9, 9a) de sorte qu'il s'appuie contre un côté de la première pièce (5) situé à l'opposé de la seconde pièce (6), et exerce sur l'élément d'assemblage (1) une force de serrage permettant de serrer les deux pièces (5, 6) l'une contre l'autre,
**caractérisé en ce qu'**
• on utilise un élément d'assemblage (1) qui comporte une tête de serrage (3, 3a) ayant la forme d'une sphère, et la mise en place s'effectue par enclipsage élastique de l'élément de serrage (9, 9a) sur la sphère,
• après la fixation les deux pièces sont assemblées en permanence l'une avec l'autre en particulier par soudage ou collage, et
• après l'assemblage permanent des deux pièces (5, 6), l'élément d'assemblage (1) et l'élément de serrage (3, 3a) sont enlevés des deux pièces (5, 6).

2. Assemblage de pièces comprenant :
• une première pièce (5) comprenant un premier trou (7),
• une seconde pièce (6) s'appliquant sur la première pièce (5) et comprenant un second trou (8),
• un élément d'assemblage (1) qui s'étend au travers des deux trous (7, 8) et dépasse des deux pièces (5, 6),
assemblage de pièces dans lequel il est prévu un élément de serrage (9, 9a) qui s'appuie sur un côté de la première pièce (5) situé à l'opposé de la seconde pièce (6), et exerce sur l'élément d'assemblage (1) une force de serrage permettant de serrer les deux pièces (5, 6) l'une contre l'autre,
l'élément d'assemblage (1) comporte au moins une tête de serrage (3, 3a) qui a la forme d'une sphère, et dépasse d'un côté de la première pièce (5) situé à l'opposé de la seconde pièce (6),
**caractérisé en ce que**
l'élément de serrage (9, 9a) est enclipsé élastiquement sur la sphère, l'élément d'assemblage (1) comporte un segment d'ajustage (4) qui est complémentaire des deux trous (7, 8),
les deux pièces (5, 6) étant positionnées par le segment d'ajustage (4) de façon à ne pas pouvoir coulisser l'une par rapport à l'autre dans un plan perpendiculaire à l'axe longitudinal (2) de l'élément d'assemblage (1), et
les deux pièces sont assemblées en permanence l'une avec l'autre en particulier par soudage ou collage.

3. Assemblage de pièces conforme à la revendication 2,
**caractérisé en ce que**
les trous (7, 8) sont circulaires.

4. Assemblage de pièces conforme à la revendication 2 ou 3,
**caractérisé en ce que**
les deux trous (7, 8) sont orientés concentriquement l'un par rapport à l'autre.

5. Assemblage de pièces conforme à l'une des revendication 2 à 4,
**caractérisé en ce que**
l'élément d'assemblage (1) présente une symétrie de rotation par rapport à un axe longitudinal (2).

6. Assemblage de pièces conforme à l'une des revendication 2 à 5,
**caractérisé en ce que**
la tête de serrage (3, 3a) est assemblée en une seule pièce avec le segment d'adaptation (4).

7. Assemblage de pièces conforme à l'une des revendications 2 à 6,
**caractérisé en ce que**
l'élément d'assemblage (1) comporte une première tête de serrage (3) qui est assemblée par l'intermédiaire du segment d'adaptation (4) à une seconde tête de serrage (3a).

8. Assemblage de pièces conforme à la revendication 7,
**caractérisé en ce qu'**
un élément de serrage (9a) est également enclipsé sur la seconde tête de serrage (3a).

9. Assemblage de pièces conforme à l'une des revendications 2 à 8,
**caractérisé en ce que**
l'élément d'assemblage (1) est réalisé en métal, en particulier en acier ou en aluminium.

10. Assemblage de pièces conforme à l'une des revendications 2 à 9,
**caractérisé en ce qu'**
au moins l'une des deux pièces (5, 6) est constituée par un élément d'une carrosserie de véhicule à fabriquer.
